Europäisches Patentamt

European Patent Office

Office européen des brevets

(11) Veröffentlichungsnummer: **0 502 342 A1**

## (12) EUROPÄISCHE PATENTANMELDUNG

(21) Anmeldenummer: **92102370.1**

(22) Anmeldetag: **13.02.92**

(51) Int. Cl.5: **C08J 3/20**, C08J 3/22

(30) Priorität: **26.02.91 DE 4105909**

(43) Veröffentlichungstag der Anmeldung:
**09.09.92 Patentblatt 92/37**

(84) Benannte Vertragsstaaten:
**DE ES FR GB IT**

(71) Anmelder: **RHEIN CHEMIE RHEINAU GmbH**
**Mülheimer Strasse 24-28, Postfach 81 04 09**
**W-6800 Mannheim(DE)**

(72) Erfinder: **Leinhos, Volker, Dipl.-Ing.**
**An den Dreissigruten 34a**
**W-6087 Büttelborn(DE)**
Erfinder: **Graf, Hans-Joachim, Dr.**
**Billingstrasse 14**
**W-6800 Mannheim 81(DE)**

(74) Vertreter: **Gremm, Joachim, Dr. et al**
**Bayer AG Konzernverwaltung RP Patente**
**Konzern**
**W-5090 Leverkusen 1, Bayerwerk(DE)**

(54) **Kautschukchemikalien-Mischung in dosierter Form.**

(57) Eine Kautschukchemikalien-Mischung läßt sich besonders gut dosieren, wenn jede Chemikalie in ein Trägermaterial eingebettet ist, wobei parallel aneinanderhaftende Stränge (2, 3, 4) ein Strangbündel (1) bilden und jeder oder mehrere Stränge (2, 3, 4) gesondert eine der Chemikalien enthalten und im Strangbündel (1) in jedem Querschnitt die Chemikalien im gewünschten Verhältnis der Mischung vorhanden sind.

FIG.1

EP 0 502 342 A1

Die Erfindung betrifft eine Kautschukchemikalien-Mischung in dosierter Form, wobei hier die Chemikalie in einem Trägermaterial eingebettet ist.

Die in der Regel pulverförmigen Chemikalien für Kautschukmischungen werden meist in ungesättigte Elastomere oder Faktis eingebettet. Um sie besser dosieren zu können, hat man dieses Gemisch aus Trägermaterial und Chemikalie in Granulat überführt (DE-GM 77 06 963).

Aber auch die Verarbeitung dieses Granulats bereitet Schwierigkeiten, da die einzelnen Komponenten in Granulatform noch im richtigen Verhältnis dosiert werden müssen, wobei es zu Fehldosierungen kommen kann oder daß man versehentlich eine nicht gewünschte Komponente beimischt. Auch bei der Aufgabe auf die Mischwalze können Probleme entstehen.

Es besteht die Aufgabe, eine Kautschukchemikalien-Mischung in dosierter Form bereitzustellen, welche immer exakt das gewünschte Mischungsverhältnis garantiert.

Gelöst wird diese Aufgabe durch ein Bündel paralleler aneinanderhaftender Stränge, wobei verschiedene Chemikalien gesondert voneinander jeweils in einem oder in mehreren Strängen enthalten und im Strangbündel in jedem Querschnitt im Verhältnis der gewünschten Mischung vorhanden sind.

Auf diese Weise erhält man die Chemikalien in dosierter, in das Trägermaterial eingebetteter Form als Meterware. Das Volumen bzw. Gewicht sowie die Chemikalienmengen sind natürlich vom Hersteller anzugeben. Für jede Mischung ist also ein gesondertes Strangbündel herzustellen. Um in der Praxis Verwechselungen zu vermeiden, ist es sinnvoll, jedem Strangbündel einer Standardmischung eine charakteristische Querschnittsform zu verleihen, welche immer beigehalten wird. Solche Strangbündel lassen sich durch Coextrusion der einzelnen Stränge herstellen. Durch leichtes Aneinanderpressen der Stränge läßt sich die Haftung benachbarter Stränge erzielen. Besonders vorteilhaft ist es, wenn für alle Chemikalien das Verhältnis zum Trägermaterial mengenmäßig gleich ist, denn dann stehen auch die Querschnittsflächen der Stränge bzw. die Summe der Querschnittsflächen jeweils die gleiche Chemikalie enthaltender Stränge im Verhältnis der Mischung zueinander.

Ist eine Chemikalie in mehreren Strängen des Strangbündels vorhanden, so ist es wegen der damit verbundenen Vorverteilung vorteilhaft, die diese Chemikalie enthaltenden Stränge im Strangbündel möglichst gleichmäßig zu verteilen.

Gemäß einer ersten Ausführungsform weist das Strangbündel Stangenform auf, gemäß einer zweiten die Form einer Wicklung.

Die Stangenform wird man dann bevorzugen, wenn das Strangbündel recht steif ist. Ist es ausreichend elastisch, so daß man es wickeln kann, wird man die Form einer Wicklung bevorzugen, weil dies raumsparender ist und weil wesentlich weniger Endstücke anfallen.

Gemäß einer weiteren besonderen Ausführungsform weisen die einzelnen Stränge vieleckigen Querschnitt auf.

Dies erlaubt es, die Querschnittsform so zu wählen, daß ein hohlraumloses Bündel entsteht. Insbesondere quaderförmige oder quadratische Querschnitte, aber auch sechseckige oder dreieckige Querschnitte sind besonders günstig.

Gemäß einer anderen Ausführungsform weisen die einzelnen Stränge runden Querschnitt auf.

Unter rundem Querschnitt ist hier nicht nur Kreisquerschnitt, sondern jeder Querschnitt mit Rundungen, wie oval, elliptisch usw., zu verstehen. Stränge kleineren Querschnitts lassen sich sehr günstig zwischen Stränge mit größerem Querschnitt einbetten. Inbesondere lassen sich Komponenten, welche spröde sind und deren Stränge leicht brechen, in durch andere Stränge aus elastischen Komponenten gebildeten Hohlräumen einbetten, um Verluste zu vermeiden.

Daß sowohl Stränge mit vieleckigem Querschnitt als auch solche mit rundem in einem Strangbündel vorgesehen sein können, ist selbstverständlich. Bei strängen aus schlecht haftenden Trägermaterialien ist es vorteilhaft, wenn das Strangbündel eine Drehung aufweist, Durch eine solche Drehung, wie sie in der Seilerei-Technik als "Schlag" bezeichnet wird, erhält das Strangbündel eine bessere Stabilität und verhindert auch ein Auflösen, wenn die Haftung der einzelnen Stränge aneinander durch Überbeanspruchung oder durch zu lange Lagerung nachlassen sollte.

Besonders günstig ist es, wenn mindestens ein Strang als Hohlstrang ausgebildet ist und mindestens einen weiteren Strang umgibt.

Das heißt, es läßt sich ein Strang zentral anordnen und darum mindestens ein konzentrischer Mantelstrang. Es ist aber auch möglich, mit einem Mantelstrang ein Bündel von weiteren, parallel angeordneten Strängen einzuhüllen.

Auch bei diesen Ausführungsformen wird man Stränge mit sprödem Trägermaterial in vorteilhafter Weise in das Innere verlegen.

Befindet sich im Strangbündel mindestens ein Strang, dessen Chemikalie mit der im benachbarten Strang enthaltenen Chemikalie reagiert, so ist vorzugsweise mindestens dieser Strang von einer Folie eingehüllt, um solche Reaktionen zu verhindern.

Weiterhin ist es möglich, das Strangbündel mit einer Verpackungsfolie zu umhüllen, beispielsweise mit einer Schlauchfolie.

Dies ist besonders dann sinnvoll, wenn die einzelnen Stränge kaum Haftung aneinander besitzen.

Vorteilhaft ist es auch, das Strangbündel bzw. die Verpackungsfolie mit einer Längenskala zu versehen. Diese Längenskala kann in einfacher Weise eine Meterskala sein und/oder das Metervolumen oder Metergewicht angeben. Auf diese Weise ist es besonders einfach, die benötigte Menge abzutrennen. Ein Abwiegen ist nicht mehr erforderlich.

Die Verpackungsfolie läßt sich dann leichter entfernen.

Es versteht sich, daß die Verpackungsfolie wie üblich, auch weitere Daten zum Inhalt sowie eine Gebrauchsanweisung aufgedruckt haben kann. Es ist vorteilhaft, daß sich solche Aufdrucke in gewissen Längenabständen wiederholen, für den Fall, daß eine Stange oder eine Wicklung eines Strangbündels nicht auf einmal verbraucht wird.

In der Zeichnung ist die neue Form der Kautschukchemikalien-Mischung als Strangbündel in mehreren Ausführungsbeispielen rein schematisch dargestellt und nachstehend näher erläutert. Es zeigen:

| | |
|---|---|
| Fig. 1 | ein Strangbündel in Stangenform in räumlicher Darstellung, |
| Fig. 2 | ein Strangbündel in Form einer Wicklung in räumlicher Darstellung, |
| Fig. 3 - 6 | weitere eckige Querschnittsformen der Stränge und |
| Fig. 7 - 10 | runde Querschnittformen der Stränge. |

Es bedeuten verschieden schraffierte Stirnflächen der Stränge solche mit verschiedenen Chemikalien im Trägermaterial. Da es nur um die Raumform bzw. die Querschnittsform der Stränge der Strangbündel geht, ist es für das Verständnis gleichgültig, welche Schraffierung welcher Chemikalie zugeordnet ist. Auf die Chemikalie selbst wird deshalb nicht eingegangen.

In Fig. 1 besteht ein Strangbündel 1 aus drei Strängen 2, 3, 4 mit Faktis als Trägermaterial und einer anderen Chemikalie in jedem Strang 2, 3, 4. Das Strangbündel 1 besitzt Stangenform, wobei die benachbarten Stränge 2 und 3 in Folien 5 bzw. 6 eingehüllt sind. Das Strangbündel 1 ist von einer Verpackungsfolie 7 eingehüllt, welche mit einer Längenskala 8 bedruckt ist und einen Aufreißfaden 9 aufweist.

In Fig. 2 besteht das Strangbündel 21 aus einer Wicklung aus drei Strängen 22, 23, 24 mit einem ungesättigten Polymer als Trägermaterial und jeweils einer anderen Chemikalie je Strang 22, 23, 24.

Fig. 3 zeigt ein Strangbündel 31 mit einer flachen Anordnung der Stränge 32, 33, 34.

In Fig. 4 zeigt das Strangbündel 41 zwei Stränge 42, 43, flach sowie einen Strang 44 senkrecht angeordnet.

Fig. 5 zeigt ein Strangbündel 51 mit Strängen 52, 53, 54, 55, wobei jeweils die Stränge 52 und 53 sowie die Stränge 54 und 55 die gleiche Chemikalie enthalten.

Fig. 6 zeigt ein Strangbündel 61 mit vier Strängen 62, 63, 64, 65 mit Sechseck-Querschnitt, welche einen fünften Strang 66 mit viereckigem Querschnitt einschließt.

Fig. 7 zeigt ein Strangbündel 71 in Form eines Seiles mit Drehung (Schlag) der einzelnen Stränge 72, 73, 74, 75, 76, 77, 78 um einen die Seele bildenden Strang 79.

In Fig. 8 zeigt das Strangbündel 81 sechs im Querschnitt ovale Stränge 82, 83, 84, 85, 86, 87.

In Fig. 9 zeigt das Strangbündel 91 einen zentrischen Strang 92, den zwei konzentrische Stränge 93, 94 umhüllen.

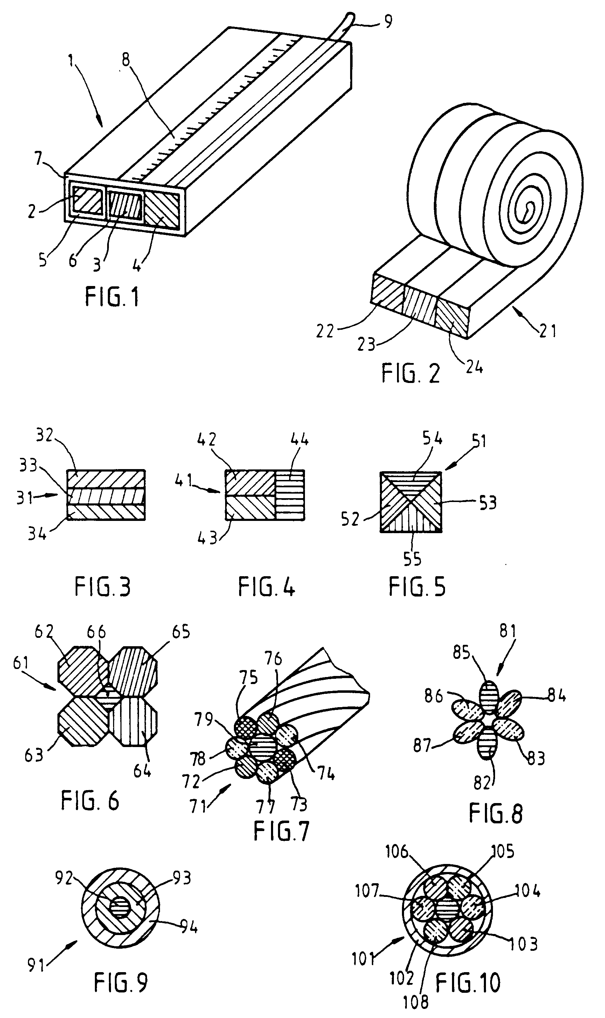

Das Strangbündel 101 gemäß Fig. 10 schließlich besteht aus einem Mantelstrang 102, in welchem sieben Stränge 103, 104, 105, 106, 107, 108 angeordnet sind.

**Patentansprüche**

1. Kautschukchemikalien-Mischung in dosierter Form, wobei jede Chemikalie in einem Trägermaterial eingebettet ist, gekennzeichnet durch ein Bündel (1; 21; 31; 41; 51; 61; 71; 81; 91; 101) paralleler aneinanderhaftender Stränge (22, 23, 24; 32, 33, 34; 42, 43, 44; 52, 53, 54, 55; 62, 63, 64, 65; 72, 73, 74, 75, 76, 77, 78, 79; 82, 83, 84, 85, 86, 87; 91, 92, 93, 94; 101, 102, 103, 104, 105, 106 107, 108), wobei verschiedene Chemikalien gesondert voneinander jeweils in einem oder in mehreren Strängen (22, 23, 24; 32, 33, 34; 42, 43, 44; 52, 53, 54, 55; 62, 63, 64, 65; 72, 73, 74, 75, 76, 77, 78, 79; 82, 83, 84, 85, 86, 87; 91, 92, 93, 94; 101, 102, 103, 104, 105, 106 107, 108) enthalten und im Strangbündel (1; 21; 31; 41; 51; 61; 71; 81; 91; 101) in jedem Querschnitt im Verhältnis der gewünschten Mischung vorhanden sind.

2. Kautschukchemikalien-Mischung nach Anspruch 1, dadurch gekennzeichnet, daß mindestens eine Chemikalie in mehreren Strängen (52 - 53, 54 - 55; 72 - 76, 73 - 75, 74 - 77 - 78, 79; 82 - 85, 83 - 86, 84 - 87; 103 - 106, 104 - 107, 105 - 108) vorhanden ist und daß die diese Chemikalie enthaltenden Stränge (52 - 53, 54 - 55; 72 - 76, 73 - 75, 74 - 77 - 78, 79; 82 - 85, 83 -86, 84 - 87; 103 - 106, 104 - 107, 105 - 108) im Strangbündel (51; 71; 81; 101) möglichst gleichmäßig verteilt sind.

3. Kautschukchemikalien-Mischung nach Anspruch 1 oder 2, dadurch gekennzeichnet, daß das Strangbündel (1) Stangenform aufweist.

4. Kautschukchemikalien-Mischung nach Anspruch 1 oder 2, dadurch gekennzeichnet, daß das Strangbündel (21) die Form einer Wicklung aufweist.

5. Kautschukchemikalien-Mischung nach einem der Ansprüche 1 bis 4, dadurch gekennzeichnet, daß die einzelnen Stränge (2, 3, 4; 22, 23, 24; 32, 33, 34; 52, 53, 54, 55; 62, 63, 64, 65, 66) vieleckigen Querschnitt aufweisen.

6. Kautschukchemikalien-Mischung nach einem der Ansprüche 1 bis 4, dadurch gekennzeichnet, daß die einzelnen Stränge (72, 73, 74, 75, 76, 77, 78, 79; 82, 83, 84, 85, 86, 87; 92, 93, 94; 102, 103, 104, 105, 106, 107, 108) runden Querschnitt aufweisen.

7. Kautschukchemikalien-Mischung nach einem der Ansprüche 1 bis 6, dadurch gekennzeichnet, daß mindestens ein Strang (93, 94;) als Hohlstrang ausgebildet ist und mindestens einen weiteren Strang (92; 103, 104, 105, 106, 107, 108, 109) umgibt.

8. Kautschukchemikalienmischung nach einem der Ansprüche 1 bis 7, dadurch gekennzeichnet, daß mindestens ein Strang (2,3) von einer Folie (5,6) umhüllt ist.

9. Kautschukchemikalien-Mischung nach einem der Ansprüche 1 bis 8, dadurch gekennzeichnet, daß das Strangbündel (1) mit einer Verpackungsfolie (7) umhüllt ist.

10. Kautschukchemikalien-Mischung nach einem der Ansprüche 1 bis 9, dadurch gekennzeichnet, daß das Strangbündel (1) bzw. die Verpackungsfolie (7) mit einer Längenskala (8) versehen ist.

FIG.1

FIG. 2

FIG.3

FIG.4

FIG.5

FIG. 6

FIG.7

FIG.8

FIG.9

FIG.10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | US-A-4 671 996 (S. E. CANTOR) 9. Juni 1987<br>* Zusammenfassung *<br>* Spalte 2, Zeile 20 – Spalte 3, Zeile 19 *<br>* Ansprüche 1,2,6,7 *<br>--- | 1,2,8,9 | C08J3/20<br>C08J3/22 |
| X | US-A-3 976 530 (J. E. CALLAN) 24. August 1976<br>* Spalte 2, Zeile 6 – Zeile 41 *<br>* Spalte 3, Zeile 56 – Spalte 4, Zeile 40 *<br>* Spalte 5, Zeile 7 – Zeile 33 *<br>* Beispiele *<br>* Anspruch 1 *<br>--- | 1-8 | |
| A | US-A-4 957 970 (R. L. HOLSAPPLE; J. A. KAY) 18. September 1990<br>* Zusammenfassung; Anspruch 1 *<br>--- | 8 | |
| A | BE-A-646 446 (ADSHEAD, RATCLIFFE AND CO. LTD.) 31. Juli 1964<br>* Seite 2, Zeile 15 – Zeile 23 *<br>* Seite 4, Zeile 8 – Zeile 12 *<br>* Ansprüche 1,9,10 *<br>----- | 1,2,7 | |

RECHERCHIERTE SACHGEBIETE (Int. Cl.5 )

C08J

Der vorliegende Recherchenbericht wurde für alle Patentansprüche erstellt

| Recherchenort | Abschlußdatum der Recherche | Prüfer |
|---|---|---|
| DEN HAAG | 10 JUNI 1992 | Heidrun R. Görke |